(19) **Europäisches Patentamt / European Patent Office / Office européen des brevets**

(11) **EP 0 802 656 B1**

(12) **FASCICULE DE BREVET EUROPEEN**

(45) Date de publication et mention
de la délivrance du brevet:
**26.12.2007 Bulletin 2007/52**

(51) Int Cl.:
**H04L 25/02** *(2006.01)* **H04L 1/08** *(2006.01)*

(21) Numéro de dépôt: **97460015.7**

(22) Date de dépôt: **17.04.1997**

(54) **Procédé d'estimation de canal et récepteur correspondant**

Verfahren zur Kanalschätzung und entsprechender Empfänger

Method of channel estimation and corresponding receiver

(84) Etats contractants désignés:
**DE ES FI GB IT SE**

(30) Priorité: **19.04.1996 FR 9605200**

(43) Date de publication de la demande:
**22.10.1997 Bulletin 1997/43**

(73) Titulaire: **Wavecom**
**F-92130 Issy les Moulineaux (FR)**

(72) Inventeurs:
• **Siala, Patrick Mohamed**
**92240 Malakoff (FR)**
• **Alard, Michel**
**75004 Paris (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
EP-A- 0 552 699    EP-A- 0 597 317
EP-A- 0 715 440    WO-A-94/18752
WO-A-94/28661    US-A- 5 371 471
US-A- 5 371 760

• HO & KIM: "On pilot symbol assisted detection of MSK and GTFM in fast fading channels" PROCEEDINGS OF THE GLOBAL TELECOMMUNICATIONS CONFERENCE 1994, 28 novembre 1994 - 2 décembre 1994, NEW YORK, US, pages 967-972, XP000488681

• SHAO, NIKIAS: "An ML/MMSE estimation approach to blind equalization" PROCEEDINGS OF THE INTERNATIONAL CONFERENCE ON ACOUSTICS, SPEECH AN SIGNAL PROCESSING (ICASSP), S. STATISTICAL SIGNAL AND ARRAY PROCESSING ADELAIDE, APR. 19 - 22, 1994, 19 - 22 avril 1994, NEW YORK, US, pages IV-569-IV-572, XP000530585

• WHITE, PERREAU, DUHAMMEL: "Reduced computation blind equalization for FIR channel input Markov Models" PROCEEDINGS OF THE IEEE INTERNATIONAL CONFERENCE ON COMMUNICATIONS, 18 - 22 juin 1995, NEW YORK, US, pages 993-997, XP002044360

• DEMPSTER, LAIRD, RUBIN: "Maximum likelihood from incomplete data via the EM algorithm." JOURNAL OF THE ROYAL STATISTICAL SOCIETY, vol. 39, 1977, LONDON, GB, pages 1-38, XP000614941

• CHANG & GEORGHIADES: "Iterative joint sequence and channel estimation for fast time-varying intersymbol iterference channels" PROCEEDINGS OF THE INTERNATIONAL CONFERENCE ON COMMUNICATIONS 1995, 18 - 22 juin 1995, NEW YORK, US, pages 357-361, XP000533010

• LECHLEIDER: "New models for random channels" PROCEEDINGS OF THE GLOBAL TELECOMMUNICATIONS CONFERENCE 1994, 28 novembre 1994 - 2 décembre 1994, NEW YORK, US, pages 1915-1919, XP000488853

**Description**

Le domaine de l'invention est celui de la transmission de données numériques, en particulier dans des canaux de transmission présentant, ou pouvant présenter, des évanouissements à fort Doppler et de faibles interférences entre symboles (IES). Plus précisément, l'invention concerne l'estimation du canal de transmission et la démodulation dans des récepteurs de signaux transmis aux travers de tels canaux.

Un domaine d'application privilégié, bien que non exclusif, de l'invention est celui des communications numériques entre des satellites et des mobiles. Elle peut être envisagée notamment dans le cadre des projets ICO et Iridium. Plus généralement, l'invention s'applique avantageusement dans tous les systèmes de communications où le canal présente un fort Doppler et une faible IES.

Dans les systèmes de communications numériques conventionnels, on utilise fréquemment des symboles de synchronisation. Ils permettent au récepteur non seulement de se synchroniser, mais aussi d'estimer convenablement le canal pour garantir un bon déroulement de la phase de démodulation.

Dans le cas de ces systèmes de communication conventionnels, les symboles de synchronisation sont consécutifs et forment une séquence de synchronisation, généralement placée au début des trains de données. La synchronisation au niveau du récepteur est réalisée en détectant un dépassement de seuil de la corrélation des échantillons reçus avec ceux de la séquence utilisée pour la synchronisation. Cette synchronisation permet d'une part la détection du début d'un train de données et d'autre part la détermination avec précision des instants d'ouverture maximale du diagramme de l'oeil.

Dans le cadre des études effectuées pour le système GSM, on a cherché à construire des séquences de synchronisation adaptées aux canaux à évanouissement à faible Doppler et à forte IES. Ces études ont montré l'intérêt, pour ce genre de canaux, de placer ces séquences de synchronisation au milieu de chaque train de données.

Les motifs de séquences de synchronisation proposés conduisent à des algorithmes de synchronisation et d'estimation de canal intuitifs et simples à mettre en oeuvre. Ils ont en conséquence été adoptés dans plusieurs systèmes de communications numériques.

Ils sont également envisagés dans des projets de téléphonie par satellite. Toutefois, ils s'avèrent beaucoup moins efficaces pour ce type de canaux, et conduisent à des limitations importantes en terme de performance lorsqu'on aborde des canaux à fort Doppler et à faible IES, tels qu'un canal satellite.

Le principe de base de la synchronisation temporelle et de l'estimation de canal par le récepteur est de transmettre une séquence de symboles connus de celui-ci dans les trains de données envoyées par l'émetteur. Moyennant l'utilisation de quelques algorithmes prédéfinis, ces symboles sont exploités pour garantir non seulement une bonne synchronisation du récepteur, mais aussi une estimation fiable du canal, permettant ainsi un bon déroulement de la phase de démodulation.

Dans les systèmes connus, on utilise un motif de synchronisation constitué d'une séquence de symboles groupés possédant de bonnes propriétés de corrélation. Ces propriétés sont mises à profit principalement pour bien se synchroniser au niveau du récepteur. Dans le cadre des systèmes de communications radio-mobiles, tels que le GSM, le canal est quasi statique durant un train de données mais présente cependant des IES très sévères. Ces propriétés de corrélation s'avèrent alors bien adaptées et même nécessaires à une estimation simple et directe de la réponse impulsionnelle du canal.

Des systèmes d'estimation de canal de ce type sont par example décrits dans les les documents WO-94/28661 et "on pilot symbol assisted detection of MSK and GTFM in fast fading channels".

Ces séquences de synchronisation peuvent être utilisées dans des systèmes de communications entre satellites et mobiles. Il est cependant à noter que si les canaux rencontrés dans ce genre d'applications présentent des IES négligeables par rapport au rythme symbole, leurs variations au niveau des trains de données reçus sont très importantes. En d'autres termes, le canal de transmission ne peut alors pas être considéré comme quasi statique pendant la durée d'un train de données (en terme de représentation temps-fréquence, on peut dire que ces canaux sont les duaux de ceux présentés ci-dessus).

De ce fait, l'utilisation d'une séquence de synchronisation classique dans ce type de systèmes est purement arbitraire, et ne résout que le seul problème de synchronisation au niveau du récepteur.

Plus précisément, si le choix de la synchronisation groupée dans le cadre des canaux quasi statiques à forte IES (cas classique du GSM notamment) est bien fondé, il n'en est pas nécessairement de même des canaux à fort Doppler et faible IES. Ces derniers présentent des variations considérables au niveau des trains de données reçus. La séquence de symboles de synchronisation classique peut garantir une bonne synchronisation du récepteur. En revanche, la qualité de l'estimation de canal est sévèrement compromise, car non représentative de l'état du canal pendant la réception des données utiles d'un train de données.

La synchronisation classique n'est donc pas adaptée aux systèmes communicant à travers un canal à fort Doppler, pour la fonction d'estimation du canal et de démodulation.

L'invention a notamment pour objectif de pallier ces inconvénients de l'état de la technique, dans les systèmes de transmission numérique organisés en trains de données, et pouvant être confrontés, au moins dans certaines situations et/ou à certains instants, à des canaux à fort Doppler, ne pouvant pas être considérés comme quasi statiques sur la durée d'un train de données.

Plus précisément, un des objectifs de l'invention est de fournir des structures de permettre notamment d'effectuer une estimation du canal et une démodulation fiables en toute circonstance.

Un autre objectif de l'invention est d'optimiser simultanément, dans les récepteurs, la synchronisation, la qualité de l'estimation de canal et, le cas échéant, l'efficacité de l'entrelacement des données codées. En d'autres termes, il doit réaliser un compromis entre une bonne synchronisation, une bonne estimation du canal au niveau du récepteur et un bon entrelacement des données codées.

Un autre objectif de l'invention est également de limiter les pertes en débit utile, et donc de limiter le nombre de données de référence nécessaires.

Un autre objectif de l'invention est de fournir des procédés d'estimation de canal, et des récepteurs correspondants, qui puissent manipuler des motifs arbitraires de synchronisation.

Un objectif complémentaire de l'invention est de fournir un estimateur de canal qui puisse améliorer significativement ses performances en tenant compte de tout -ou partie de la structure codée des données émises.

Ces objectifs, ainsi que d'autres qui apparaîtront par la suite, sont atteints selon l'invention à l'aide d'un procédé d'estimation selon la revendication principale.

Des caractéristiques avantageuses de ce procédé font l'objet des revendications secondaires.

L'invention utilise un signal de structure tout à fait différente de celle des signaux classiques, dans lesquels les symboles de référence, utilisés pour estimer le canal, sont systématiquement groupés en un bloc de synchronisation unique (généralement en début du train de données, ou éventuellement au milieu de celui-ci).

La solution de l'invention, qui va à l'encontre de cette technique classique, apporte une réponse efficace aux problèmes liés aux canaux à forts Doppler.

Un second procédé d'estimation d'un canal de transmission d'un tel signal numérique comprend une étape d'écriture de ladite estimation sous la forme d'une combinaison de fonctions de base prédéterminées, de largeur de bande supérieure ou égale à celle du spectre de puissance Doppler (SPD) dudit signal.

De façon préférentielle, lesdites fonctions de base sont des restrictions de séquences sphéroïdales aplaties discrètes (SSAD, connues dans la littérature anglaise sous le nom de « Discrete Prolate Spheroidal Sequences ») [8].

Ce type de fonctions permet d'obtenir une estimation très précise du canal, à partir d'un nombre réduit de fonctions de base (par exemple 3 à 8).

Selon un mode de réalisation avantageux de l'invention, ce procédé comprend une étape préliminaire d'adaptation des caractéristiques desdites fonctions de base, notamment en fonction dudit spectre de puissance Doppler.

On obtient ainsi une base adaptée au mieux au canal à estimer.

L'invention concerne également, bien sûr, les dispositifs d'estimation de canal et les récepteurs mettant en oeuvre les procédés décrits ci-dessus, ainsi que les émetteurs et récepteurs de signaux selon l'invention.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, parmi lesquels :

- la figure 1 est un schéma synoptique d'un émetteur d'un signal selon l'invention ;
- la figure 2 est un schéma synoptique d'un récepteur selon l'invention, pouvant recevoir les signaux de l'invention ;
- la figure 3 illustre de façon schématique les principes de l'estimation du canal de transmission selon l'invention ;
- la figure 4 présente le fonctionnement d'un récepteur mettant en oeuvre un procédé selon l'invention ;
- la figure 5 illustre la décroissance rapide des valeurs propres de la matrice de corrélation du canal discret au niveau des trains de données émis ;
- les figures 6A à 6G illustrent les vecteurs propres correspondant aux valeurs propres les plus significatives de la matrice de corrélation du canal discret au niveau des trains de données émis ;
- la figure 7 illustre les pondérations des vecteurs propres, de la matrice de corrélation du canal discret au niveau des trains de données émis, utilisés dans l'estimation du canal par le récepteur.

### 1. Généralités

L'invention s'applique donc notamment à des canaux stationnaires à faible IES avec des SPD de largeurs et formes quelconques. En particulier, ces canaux peuvent être de type Rice ou Rayleigh avec des SPD en corne ou plats. Notamment, ils peuvent inclure le cas d'un décalage (« offset ») statique en fréquence résultant d'une correction partielle de l'erreur de fréquence de l'oscillateur local au niveau du récepteur. Cette correction est en général accomplie grâce à une boucle à verrouillage de phase conventionnelle.

L'invention propose une technique d'estimation de canal qui utilise une structure de signal nouvelle, dans laquelle plusieurs blocs de référence sont répartis dans chaque train de données.

Ainsi, un objectif de l'invention est de fournir pour un canal Doppler et un système de communication de caractéristiques données le motif de synchronisation le mieux adapté. Ce motif doit être suffisamment réparti sur une partie plus au moins étendue des trains de données pour caractériser et estimer au mieux les variations significatives du canal et répartir au mieux les données codées. Il ne doit donc pas privilégier les performances du récepteur en terme de synchronisation au prix du sacrifice de la qualité de l'estimation de canal et de l'entrelacement des données codées.

Le procédé d'estimation de canal correspondant proposé selon l'invention repose notamment sur une modélisation convenable du canal réel et une représentation nouvelle et simplifiée de celle-ci.

Cette représentation doit tenir compte autant que possible de toutes les informations connues sur le canal. Ces informations doivent inclure au minimum la largeur maximale de la bande Doppler, qui doit être impérativement connue par le récepteur.

Dans le cas où la forme du SPD du canal n'est pas connue, l'algorithme adopte une modélisation plate de celle-ci. Cette modélisation convient le mieux du point de vue de la théorie de l'information car elle conduit à une entropie maximale de canal [7]. Dans ce cas précis, le canal discret peut s'écrire comme une combinaison des restrictions de séquences sphéroïdales aplaties discrètes (SSAD) au support du train de données à démoduler. Ces SSAD ont une bande étroite de largeur égale ou supérieure à celle du SPD.

Il existe essentiellement deux critères qui peuvent être utilisés pour estimer un des paramètres inconnus : le critère du maximum de vraisemblance (MV) et le critère du maximum a posteriori (MAP) [1]. Dans le cas du critère MV, les paramètres sont supposés déterministes mais inconnus. Dans le cas du critère MAP, ces paramètres sont supposés aléatoires et caractérisés par une densité de probabilité (DP) a priori connue.

Le critère MV convient le mieux aux problèmes d'estimation de l'énergie par symbole émis ou de la variance de bruit à la sortie d'un filtre donné, quand ceux-ci ne sont pas connus par le récepteur. Le critère MAP convient le mieux au problème d'estimation du canal discret au niveau des trains de données émis.

Moyennant la représentation simplifiée du canal développée par les inventeurs et présentée par la suite, et (non obligatoirement) les symboles de référence envoyés par l'émetteur, le récepteur met en oeuvre l'algorithme EM pour effectuer une estimation itérative d'une partie ou de la totalité de ces paramètres selon les critères correspondants.

Autrement dit, cet algorithme permet de retrouver la réalisation de canal la plus vraisemblable conditionnellement au signal observé au niveau du récepteur. Il permet également d'estimer au mieux l'énergie par symbole transmis et/ou de la variance de bruit à la sortie d'un filtre donné quand ceux-ci ne sont pas totalement connus.

L'un des avantages de l'algorithme EM est de pouvoir utiliser d'une façon optimale aussi bien des symboles de synchronisation (référence explicite) que la totalité ou une partie des caractéristiques des symboles d'information (référence implicite) composant un train de données pour accomplir l'estimation de canal. Plus précisément, cet algorithme permet d'utiliser avantageusement le codage subi par les données d'informations envoyées pour améliorer significativement la qualité de l'estimation de canal. Il permet également de tenir compte de la mémoire éventuellement due à la modulation utilisée.

Cet algorithme évite de recourir systématiquement aux motifs de synchronisation groupés classiques, qui doivent leur succès à leur exploitation immédiate par des algorithmes intuitifs et simples.

Le choix de l'emplacement des symboles de référence dans les trains de données est en effet important pour les performances de l'estimateur de canal. Il est également d'importance capitale dans la bonne détermination des conditions initiales de l'algorithme EM. En effet, celui-ci tend en général à converger vers des maxima locaux de la probabilité conditionnelle (défini comme la probabilité a posteriori d'une réalisation du canal conditionnellement au signal reçu), si l'emplacement des symboles de synchronisation est mal choisi.

A l'aide de l'estimation du canal, le récepteur effectue d'une manière standard une démodulation et/ou un décodage des données d'information reçues selon le critère du MV.

2. Principe d'un émetteur

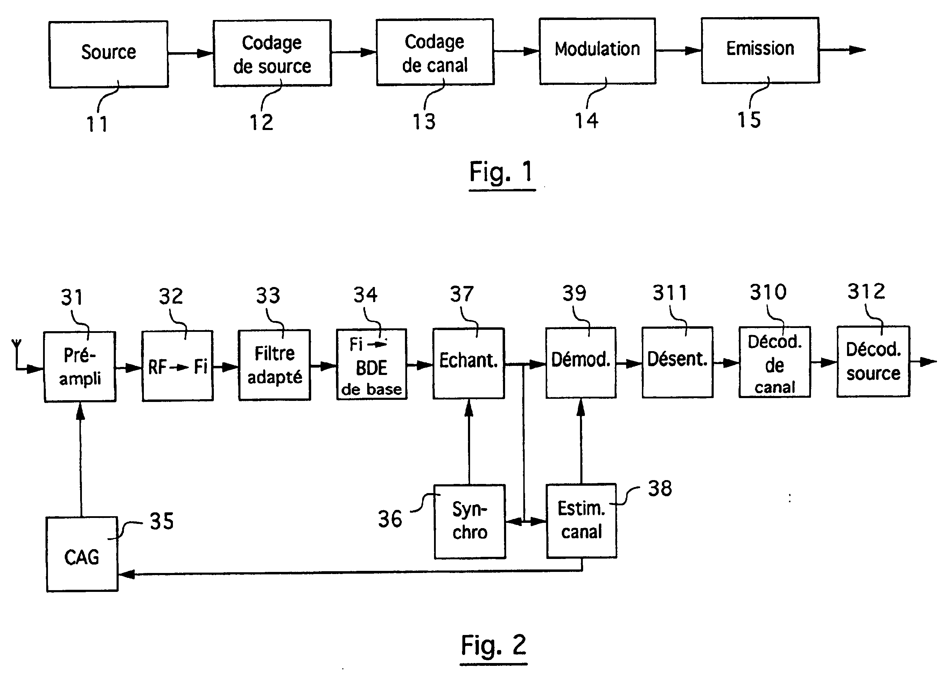

La Figure 1 présente un schéma synoptique simplifié d'un émetteur d'un signal formé de train de données selon l'invention. Le procédé d'émission s'en déduit directement.

On considère une source d'information 11 de débit arbitraire générant des données binaires ou non correspondant à des signaux source de type quelconque (sons, images, données, ...). Ces données sont éventuellement soumises à un codage de source 12, suivi d'un codage correcteur d'erreurs 13 adapté aux canaux de type Rice sans IES.

Les données codées générées à partir de ces codes (symboles utiles) sont ensuite organisées en trains de données et modulées (14). Elles sont donc convenablement réparties et entrelacées sur plusieurs trains de données afin d'apporter la diversité nécessaire et de décorréler l'évanouissement affectant les symboles transmis. Des éléments de référence sont également introduits dans chaque train de données, selon les principes de répartition précisés par la suite. Enfin, les données sont modulées en phase.

Le signal en bande de base généré par le modulateur 14 est obtenu par filtrage de mise en forme des symboles composant ce train. Dans le cas des modulations MDP2 et MDP4, le filtre de mise en forme est en général un filtre en racine de Nyquist pour éviter toute IES en sortie du filtre adapté du récepteur. Le signal en bande de base ainsi généré est alors transposé en fréquence, amplifié et émis (15) à travers le canal.

3. Exemple: le système ICO

A titre d'exemple, on présente ici les caractéristiques en émission du système ICO (Intermediate Circular Orbit) de radio-communication par satellite, auquel s'applique avantageusement l'invention.

Ce système est basé sur une technique d'accès multiple réparti dans le temps (AMRT). Il est basé sur des trames de données, composées chacune de 6 intervalles de temps (connues en anglais sous le nom de « time slots »). Ces trames sont émises dans les sens montant (mobile-satellite) et descendant (satellite-mobile) aussi bien pour les canaux dédiés à la voix que ceux dédiés à la signalisation. A chaque intervalle de temps correspond un train de données émis composé de $N$ = 120 ou 240 symboles, selon les cas.

L'ensemble des canaux logiques utilisés par le système ICO est très proche de celui du GSM. Il comporte, en particulier, un canal TCH (« Traffic CHannel ») au niveau des liaisons montante et descendante, un canal BCCH (« Broadcast Common Channel ») au niveau de la liaison descendante et un canal RACH (« Random Access Channel ») au niveau de la liaison montante.

La modulation adoptée pour la liaison descendante est la MDP4 pour le TCH et la MDP2 pour le BCCH. Dans ces deux cas, le nombre de symboles par trains de données est de 120 (1 bit par symbole en MDP2 ; 2 bits par symbole en MDP4). La modulation GMSK à phase continue, et donc avec mémoire, est retenue au niveau de la liaison montante, pour des raisons de non-linéarité au niveau des émetteurs mobiles. Le nombre de symboles transmis est 240 pour le TCH, et 120 pour le RACH. Dans les deux cas, un symbole émis correspond à un bit émis.

Chaque canal logique possède ses propres techniques de codage de canal et d'entrelacement. Cependant, ce codage et cet entrelacement sont organisés de façon à permettre, autant que possible, d'unifier la structure du décodeur. Chaque canal logique peut mettre en oeuvre la séquence d'opérations suivante (chacune de ces opérations étant optionnelle) :

-    les éléments binaires d'information sont codés avec un code externe en bloc cyclique et systématique ;
-    les élément binaires résultant de ce codage sont ensuite codés par le code interne, soit de type Golay étendu, soit de type convolutif;
-    les éléments binaires codés sont ensuite codés à l'aide d'un code à répétition ;
-    les éléments binaires codés obtenus sont finalement entrelacés avec une fonction d'entrelacement.

Le canal RACH véhicule entre autres l'identité d'un terminal mobile qui veut accéder aux services du système ICO. Il nécessite une marge de liaison plus importante que les canaux de trafic. Pour cette raison, il met en oeuvre un code de Golay suivi d'un code à répétition (3,1 3).

Selon l'invention, les symboles de référence sont répartis dans plusieurs blocs (d'au moins un symbole) dans chaque train de données.

Le nombre de symboles utilisés pour la synchronisation dépend des caractéristiques du canal de transmission réel.

Le canal de transmission sous-jacent au canal logique TCH est un canal de type Rice (c'est-à-dire constitué d'un trajet direct et d'une partie multi-trajets avec un retard relatif quasi nul par rapport à ce dernier) présentant un rapport $K$ entre la puissance du trajet direct et celle des multi-trajets favorable, avec des valeurs de l'ordre de 7 à 12 dB. Le canal TCH peut utiliser en tant que références seulement 10% des symboles du train de données, soit 12 symboles de référence par train de données émis pour la liaison descendante, et 24 symboles de référence par train de données émis pour la liaison montante.

Ces symboles peuvent être uniformément répartis, un par un, deux par deux ou quatre par quatre sur tout un train de données (blocs de référence comprenant 1, 2, ou 4 symboles de référence).

Pour un meilleur calcul des conditions initiales pour l'estimation du canal discret, il est conseillé de mettre en oeuvre l'une des deux premières formes de synchronisation pour la liaison descendante.

La Table 1 illustre un mode d'implantation dans lequel les blocs de référence comprennent 2 symboles de référence. Cette implantation est utilisé pour le canal TCH de la liaison descendante.

Table 1

| n° de symbole | longueur du champ | contenu du champ |
|---|---|---|
| 0-1 | 2 | symboles de garde |

(suite)

| n° de symbole | longueur du champ | contenu du champ |
|---|---|---|
| 2-8 | 7 | symboles utiles |
| 9-10 | 2 | symboles de référence explicite |
| 11-28 | 18 | symboles utiles |
| 29-30 | 2 | symboles de référence explicite |
| 31-48 | 18 | symboles utiles |
| 49-50 | 2 | symboles de référence explicite |
| 51-68 | 18 | symboles utiles |
| 69-70 | 2 | symboles de référence explicite |
| 71-88 | 18 | symboles utiles |
| 89-90 | 2 | symboles de référence explicite |
| 91-108 | 18 | symboles utiles |
| 109-110 | 2 | symboles de référence explicite |
| 111-117 | 7 | symboles utiles |
| 118-119 | 2 | symboles de garde |

Pour la liaison montante, la troisième forme (table 2) est la plus adaptée, car elle permet de s'affranchir à moindres coûts de la mémoire de la modulation GMSK dans le choix des conditions initiales. Dans ce cas particulier, seule une partie de la forme d'onde correspondant au blocs de quatre symboles de référence est utilisée pour le calcul de ces conditions initiales.

Table 2

| n° de symbole | longueur du champ | contenu du champ |
|---|---|---|
| 0-3 | 4 | symboles de garde |
| 4-17 | 14 | symboles utiles |
| 18-21 | 4 | symboles de référence explicite |
| 22-57 | 36 | symboles utiles |
| 58-61 | 4 | symboles de référence explicite |
| 62-97 | 36 | symboles utiles |
| 98-101 | 4 | symboles de référence explicite |
| 102-137 | 36 | symboles utiles |
| 138-141 | 4 | symboles de référence explicite |
| 142-177 | 36 | symboles utiles |
| 178-181 | 4 | symboles de référence explicite |
| 182-217 | 36 | symboles utiles |
| 218-221 | 4 | symboles de référence explicite |
| 222-235 | 14 | symboles utiles |
| 236-239 | 4 | symboles de garde |

Le canal logique BCCH est en particulier utilisé par les terminaux mobiles pour effectuer la synchronisation au niveau des trains de données. Le canal de transmission réel sous-jacent est de type Rice avec une valeur de $K$ de l'ordre de 0 dB. Pour ces deux raisons, 32 symboles de référence explicite sont prévus.

La table 3 illustre la structure correspondante du train de données.

Table 3

| n° de symbole | longueur du champ | contenu du champ |
|---|---|---|
| 0-1 | 2 | symboles de garde |
| 2-8 | 7 | symboles utiles |
| 9-10 | 2 | symboles de référence explicite |
| 11-28 | 18 | symboles utiles |
| 29-30 | 2 | symboles de référence explicite |
| 31-46 | 16 | symboles utiles |
| 47-72 | 26 | symboles de référence explicite (mot de synchronisation) |
| 73-88 | 16 | symboles utiles |
| 89-90 | 2 | symboles de référence explicite |
| 91-108 | 18 | symboles utiles |
| 109-110 | 2 | symboles de référence explicite |
| 111-117 | 7 | symboles utiles |
| 118-119 | 2 | symboles de garde |

Une partie de ces symboles (mot de synchronisation) peut alors être groupée au milieu du train de données pour garder des performances acceptables en terme de synchronisation et de détermination de l'ouverture maximale du diagramme de l'oeil, au niveau du récepteur. L'autre partie est alors répartie sur le reste du train de données, comme c'est le cas pour le canal logique TCH.

Le canal logique RACH est utilisé dans la liaison montante par les terminaux mobiles pour demander l'accès aux services du système ICO. Le canal de transmission réel sous-jacent est en général du même type que celui du BCCH. Contrairement au canal BCCH, qui est répétitif, le canal RACH est émis de façon isolée, et doit donc être détecté en une seule passe. Par conséquent, le nombre de symboles de référence est 44, (au lieu de 32 pour le BCCH), ainsi que cela est précisé dans la table 4.

Table 4

| n° de symbole | longueur du champ | contenu du champ |
|---|---|---|
| 0-1 | 2 | symboles de garde |
| 2-7 | 6 | symboles de référence explicite |
| 8-31 | 24 | symboles utiles |
| 32-47 | 16 | symboles de référence explicite |
| 48-71 | 24 | symboles utiles (répétition) |
| 72-87 | 16 | symboles de référence explicite |
| 88-111 | 24 | symboles utiles (répétition) |
| 112-117 | 6 | symboles de référence explicite |
| 118-119 | 2 | symboles de garde |

Comme dans le cas du canal logique BCCH, une partie de ces symboles de référence peut être groupée afin de former des références de synchronisation (2 blocs de 16 symboles). Cependant, comme la modulation GMSK utilisée est une modulation à mémoire, les symboles de référence restants doivent aussi être regroupés avant d'être répartis sur le reste du train. Ce regroupement (deux blocs de 6 symboles de référence) permet bien entendu au récepteur de s'affranchir temporairement de la mémoire de la modulation pour calculer les conditions initiales de l'algorithme itératif d'estimation de canal.

Dans cette situation, il y a donc quatre blocs de référence formés de 6 ou 16 symboles de référence explicite, et trois blocs formés de 24 symboles de référence implicites, correspondant à la répétition des mêmes symboles utiles.

On réalise donc un compromis avantageux entre :

- la présence de blocs de référence relativement longs (6 ou 16 symboles), facilitant la synchronisation ;
- l'entrelacement du code à répétition (3 blocs répartis sur le train de données) ;
- le nombre de blocs répartis (4 + 3) pour l'estimation du canal.

Comme cela a déjà été indiqué, la présence de symboles de référence explicite n'est pas obligatoire, bien qu'elle permette de simplifier les traitements. Des symboles de référence implicite seuls, obtenus par répétition, peuvent également être utilisés. Par ailleurs, on rappelle que l'utilisation d'un code à répétition n'est qu'un mode de réalisation avantageux, par sa simplicité, pour l'obtention des symboles de référence implicite. En effet, ces derniers peuvent être obtenus quel que soit le code utilisé, en analysant les liens générés entre les symboles utiles par ce code [6, 9].

Lorsque les deux types de symboles de référence sont présents, les symboles de référence implicite sont avantageusement utilisés pour affiner l'estimation du canal.

### 4. Principe d'un récepteur

La Figure 2 illustre un exemple de récepteur d'un signal selon l'invention ainsi que le procédé de réception correspondant.

Le signal correspondant à un train de données reçu est préamplifié 31, puis converti en fréquence intermédiaire 32 afin de réaliser le filtrage adapté de canal 33. Le signal en fréquence intermédiaire est ensuite converti en bande de base 34 sur deux voies en quadrature, ou sur une seule voie en fréquence intermédiaire basse, puis échantillonné (37).

Le signal échantillonné est ensuite démodulé (39). Par ailleurs, il alimente un module de synchronisation 36 et un module d'estimation du canal de transmission 38.

Le module de synchronisation 36 utilise la séquence de synchronisation pour estimer le rythme symbole ainsi que les instants correspondant à l'ouverture maximale du digramme de l'oeil du signal en bande de base reçu. Le signal est échantillonné (37) à ces instants précis.

Les échantillons correspondant à un train de données sont par ailleurs utilisés par le récepteur pour déterminer une estimation 38 selon le critère MAP de la réalisation du canal discret au niveau de ceux-ci. Cette estimation 38 est effectuée moyennant la représentation simplifiée du canal discret au niveau du train de données reçu, l'utilisation de l'algorithme EM et éventuellement d'un algorithme tel que celui de Bahl [9].

Cet algorithme itératif, décrit par la suite, démarre à partir de conditions initiales arbitraires qui peuvent être obtenues avantageusement grâce aux symboles de synchronisation connus du récepteur.

La synchronisation répartie sur tout le train de données selon l'invention se révèle être d'une grande utilité parce qu'elle permet non seulement d'éviter la convergence de l'algorithme vers des maxima locaux de la probabilité conditionnnelle, mais aussi d'accélérer cette convergence à moindres frais.

Le récepteur utilise alors l'estimation 38 au MAP du canal discret au niveau d'un train de données reçu pour démoduler 39 selon un critère donné les symboles porteurs d'information de ce train. Le démodulateur 39 peut en particulier fournir des sorties pondérées afin d'améliorer les performances du décodeur 310.

Ces sorties, pondérées ou non, sont tout d'abord désentrelacées 311 et regroupées conformément à l'entrelacement et la répartition effectués au niveau de l'émetteur, puis décodées par le décodeur de canal 310. Les données démodulées sont ensuite décodées par le décodeur source 312, afin de fournir une estimation du signal source émis.

L'estimation de canal est également exploité par le récepteur pour contrôler le déroulement de la préamplification 31, moyennant l'utilisation d'une fonction de correction automatique de gain (CAG) 35.

### 5. Exemple : le système ICO

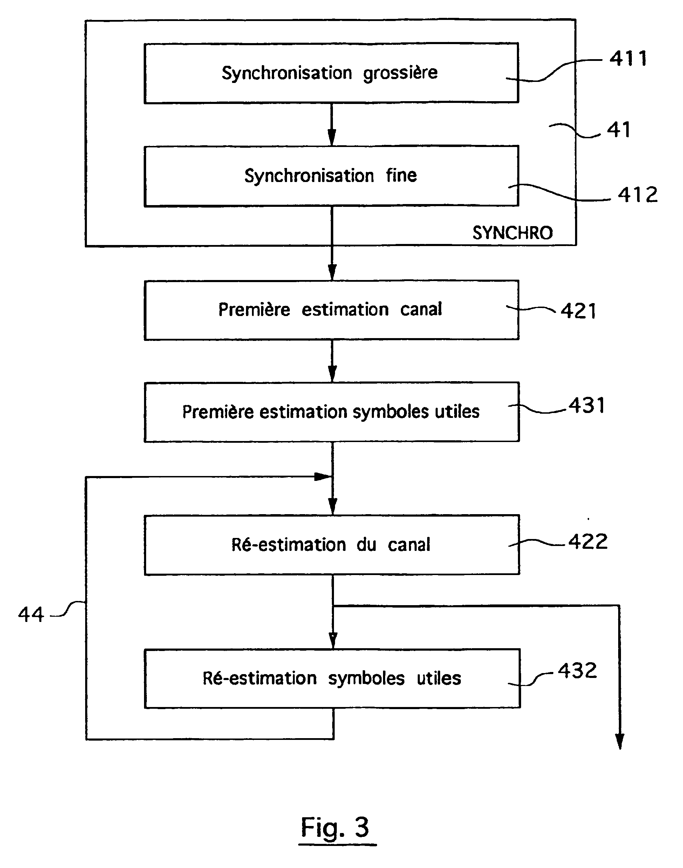

A titre d'exemple, et en relation avec la figure 3, on présente dans la suite quelques unes des caractéristiques du récepteur du système ICO dont l'émetteur est présenté dans la section précédente. Au niveau des terminaux mobiles, la synchronisation 41 des trains de données est effectuée d'une manière grossière 411, dans un premier temps, grâce à la détection du profil de puissance sur le canal logique BCCH.

Cette synchronisation est ensuite affinée 412 moyennant l'utilisation des symboles de synchronisation des trains de données du canal BCCH.

Au niveau du segment spatial (formé, dans le cas du système ICO, par l'ensemble des satellites et des stations terrestres, chaque satellite jouant uniquement un rôle de répéteur), les synchronisations grossière 411 et fine 412 sont accomplies de la même façon que par les terminaux mobiles en utilisant le canal logique RACH.

Au niveau des terminaux mobiles et des segments spatiaux, l'estimation 421, 422 du canal discret au niveau d'un train de données reçu est réalisée selon le critère du MAP. Cette estimation est réalisée grâce à l'algorithme décrit par la suite. Le récepteur commence dans un premier temps par utiliser les symboles de synchronisation pour établir des conditions initiales convenables 421 pour le bon fonctionnement de l'algorithme itératif.

A cette étape, il n'a aucune idée même partielle sur les valeurs probablement prises par les symboles d'information codés. Il attribue alors à ces symboles d'information des probabilités conditionnelles uniformes à entropie maximale 431 (selon le procédé décrit plus précisément par la suite).

Au niveau des liaisons descendantes, la symétrie des constellations de la MDP2 pour le BCCH et de la MDP4 pour le TCH conduit alors à une contribution nulle des symboles d'information dans le calcul des conditions initiales de l'algorithme itératif 44 d'estimation de canal. Ces conditions initiales sont ensuite utilisées par cet algorithme pour améliorer l'estimation du canal 422 en tenant cette fois-ci compte de la contribution supplémentaire 432 des symboles d'information codés.

Au niveau des liaisons montantes, l'estimation de canal au niveau des canaux logiques RACH et TCH suit à peut près les mêmes procédures que dans le cas des terminaux mobiles. La seule différence ici est que la modulation GMSK utilisée dans la liaison montante est une modulation à mémoire.

Comme les symboles de synchronisation émis par les mobiles sont groupés sur une base d'au moins quatre par quatre symboles (dans le cas du TCH), l'IES dû à la mémoire de la modulation et aux symboles adjacents non connus n'affectent pas les symboles du milieu de chaque groupement. Ces symboles du milieu de chaque groupement peuvent alors être utilisés pour calculer les conditions initiales de l'algorithme itératif. Pour les itérations suivantes, l'algorithme itératif utilise alors le treillis de modulation de la GMSK pour tenir également compte des symboles de synchronisation restants et des symboles d'information codés (par exemple à l'aide de l'algorithme de Bahl).

Dans le cas particulier du canal RACH, la réception des trains de données par le segment spatial, se fait d'une manière quasi asynchrone. Par ailleurs, on utilise les références implicites correspondant aux 3 blocs de 24 symboles obtenus par la répétition d'un code de Golay. Cette caractéristique de l'invention permet d'améliorer fortement la qualité de l'estimation du canal, tout en conservant également une bonne qualité de synchronisation, grâce aux références explicites groupées.

La position choisie pour les symboles de référence implicite permet d'obtenir un bon entrelacement des mots du code à répétition (3,1,3). Comme la prise en compte du code à répétition (3,1,3) peut être intégrée directement dans l'algorithme d'estimation (dans le cas où la mémoire de modulation peut être négligée au premier ordre), elle engendre une augmentation imperceptible de la complexité de celui-ci.

6. Modélisation et représentation du canal discret selon l'invention

Un des aspects de l'invention repose sur une modélisation et une représentation nouvelle simplifiée du canal discret vu à la sortie du filtre adapté du récepteur au niveau des trains de données envoyées.

6.1 Modélisation du canal de transmission

Le canal de transmission est supposé de type Rice. Il est constitué d'un trajet direct et d'une partie multi-trajets avec un retard relatif quasi nul par rapport à ce dernier. Le trajet direct est spécifié par un facteur d'atténuation complexe constant. La partie multi-trajets résultant de réflexions de terrain est quant à elle caractérisée comme un processus aléatoire stationnaire gaussien de moyenne nulle [1, 16].

Ce canal est caractérisé principalement par deux paramètres. Le premier est le rapport, $K$, entre la puissance du trajet direct et celle des multi-trajets. Le second paramètre est la fonction SPD de canal $S_c(f)$.

Cette fonction est un spectre de puissance qui donne l'intensité du canal de transmission en fonction de la fréquence Doppler $f$. Elle est égale à la transformée de Fourier de la fonction d'autocorrélation $\phi_C(\tau)$ du canal. Elle possède un support borné de largeur $B_D$ appelé étendue Doppler du canal. Dans le cadre de l'invention, cette étendue est supposée faible devant le rythme symbole $1 / T$.

6.2 Modélisation et caractéristiques des signaux émis et reçus

L'invention peut s'appliquer à de nombreux types de modulation. Dans le cadre des communications par satellites, elle concerne particulièrement la réception de trains de données modulées en phase. Ceci inclut aussi bien les modulations conventionnelles (MDP2, MDP4, MDP8, MDP16, ...) que les modulations présentant une mémoire telles que les modulations à phase continue (MSK, GMSK, ...).

Le signal en bande de base correspondant à un train de données émis de $N$ symboles s'écrit, dans le cas d'une modulation MDP, sous la forme (aisément adaptable à d'autres types de modulation [1]):

$$s(t) = \sum_{k=0}^{N-1} a_k x(t - kT),$$

où $T$ est la période symbole, $x(t)$ est un filtre de mise en forme en racine de Nyquist de norme unité et les $a_k$ sont des symboles complexes appartenant à un alphabet arbitraire $A$. Le module de ces symboles est égal à la racine carrée de l'énergie en bande de base par symbole émis $2E_s$.

Le signal à l'entrée du récepteur correspond au signal en bande base émis distordu par le canal et corrompu par un bruit complexe additif blanc gaussien de puissance spectrale en bande de base $2N_0$.

6.3 Modélisation du signal échantillonné à la sortie du filtre adapté

L'étalement Doppler $B_D$ est supposé faible par rapport au rythme symbole $1/T$. Par conséquent, les échantillons obtenus par filtrage adapté du signal reçu $r(t)$ par le filtre adapté $x^*(-t)$ et échantillonnage du signal résultant au rythme symbole aux instants d'ouverture maximale du diagramme de l'oeil peuvent être approximés, quel que soit le type de modulation [1], par

$$r_k = c_k a_k + n_k, \quad k = 0, 1, \ldots, N - 1$$

Dans cette expression, les $c_k$, $k = 0, 1, \ldots, N - 1$ représentent une réalisation du canal discret au niveau du train de données émis. Dans les cas de la MDP, les $n_k$, quant à eux, représentent une réalisation d'un bruit complexe additif gaussien discret. Ils sont indépendants et ont $2N_0$ comme variance. La fonction d'autocorrélation, $\phi_c(l)$, du canal discret se déduit directement à partir de celle du canal de transmission, $\phi_C(\tau)$, par échantillonnage de celle-ci au rythme symbole.

6.4 Représentation simplifiée du canal discret au niveau des trains de données

L'un des objectifs de l'invention est de proposer une approche tout à fait nouvelle de la représentation simplifiée des réalisations du canal discret au niveau des trains de données émis. Pour chaque train de données, le récepteur utilise les échantillons

$$r_k = c_k a_k + n_k, \quad k = 0, 1, \ldots, N - 1$$

à la sortie du filtre adapté pour détecter les symboles transmis correspondant.

Soient $(-)'$ l'opérateur transposition, $\mathbf{c} \overset{\Delta}{=} (c_0, c_1, \ldots c_{N-1})'$ le vecteur représentant la réalisation du canal discret au niveau du train de données émis et $\mathbf{L}$ sa matrice de covariance. Le vecteur $\mathbf{c}$ peut alors se décomposé sous la forme

$$\mathbf{c} = \sqrt{\phi_c(0)} \sum_{k=0}^{N-1} e_k \mathbf{b}_k,$$

où les $\mathbf{b}_k$ sont les vecteurs propres de la matrice de covariance $\mathbf{L}$ du vecteur $\mathbf{c}$ et *les* $e_k$ sont des variables aléatoires gaussiennes complexes indépendantes dont les variances sont égales aux valeurs propres $\lambda_k$ de la matrice $\mathbf{L}$ associées aux vecteurs $\mathbf{b}_k$ divisées par $\phi_c(0)$.

Les vecteurs $b_k$ forment une base orthonormée de l'espace canonique complexe à $N$ dimensions. Les valeurs propres correspondantes sont supposées arrangées dans un ordre décroissant. La DP du vecteur $e = (e_0, e_1, \ldots e_{N-1})'$, notée $p(e)$, est égale au produit des DP gaussiennes de ces composantes.

La matrice de covariance $\mathbf{L}$ est mal conditionnée du fait que l'étalement Doppler $B_D$ est petit devant le rythme d'horloge $1/T$. Par conséquent, les valeurs propres $\lambda_k$ présentent une décroissance très raide et s'évanouissent rapidement. L'un des apports de l'invention est de mettre à profit ces qualités d'indépendance des variables aléatoires $e_k$ et de décroissance rapide des valeurs propres $\lambda_k$ pour réduire substantiellement la complexité de l'estimateur du canal discret.

Dans le cas général, le récepteur possède une connaissance incomplète des caractéristiques de son oscillateur local et de celles du SPD $S_c(f)$ du canal de transmission. Dans ce cas, le SPD le plus imprévisible du point de vue de la théorie de l'information [7] est un spectre plat à support borné de largeur égale à l'étalement Doppler $B_D$.

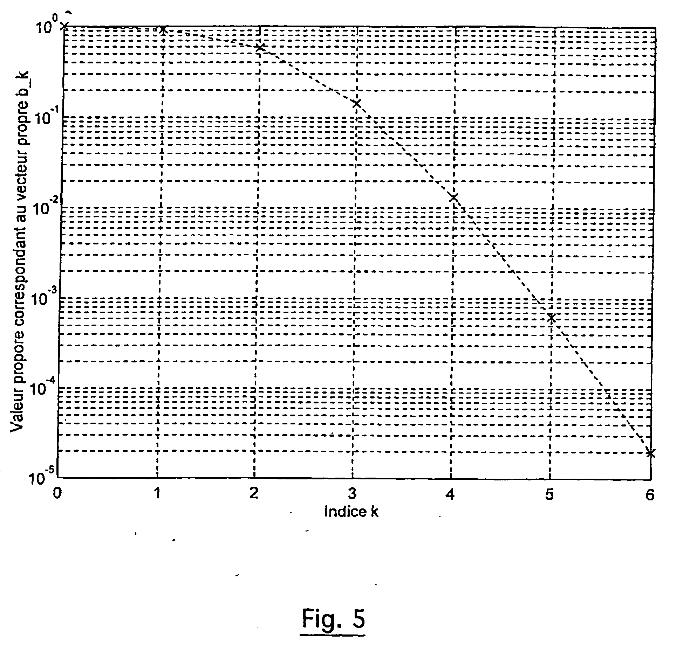

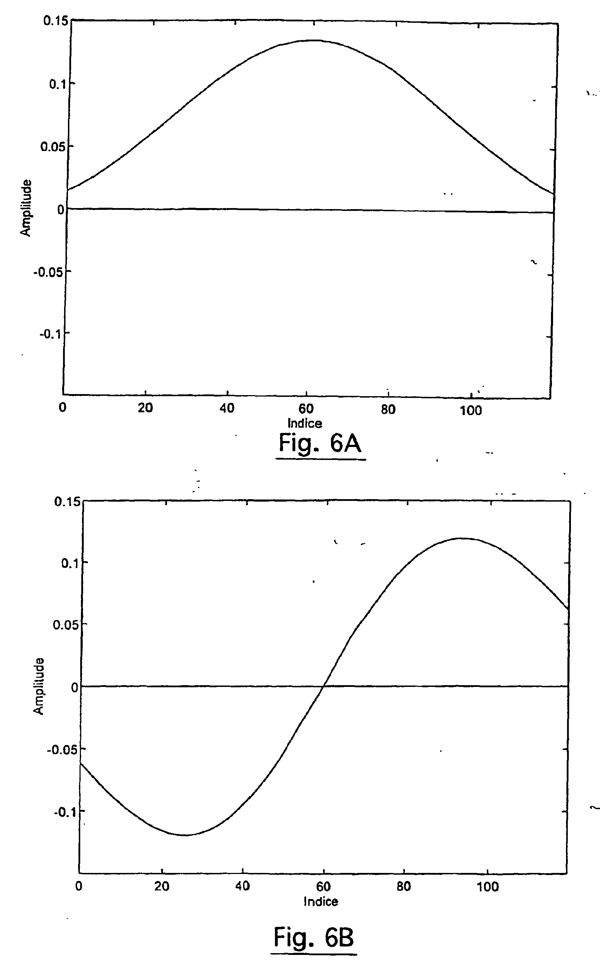

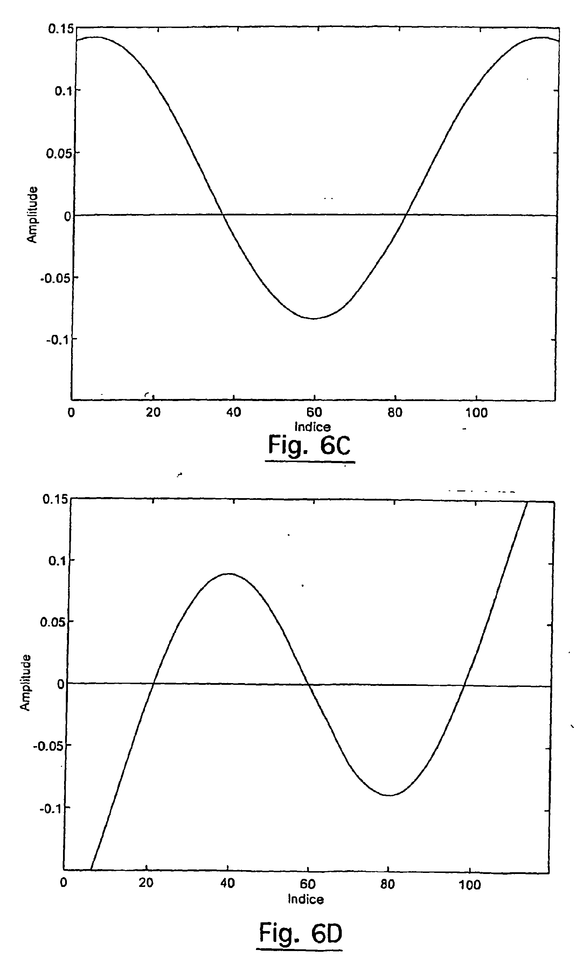

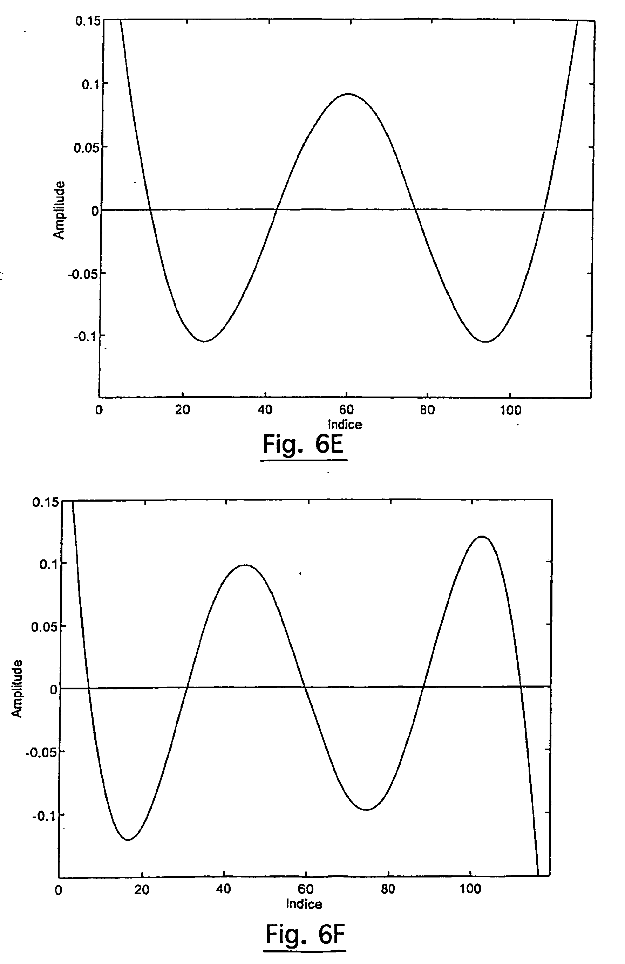

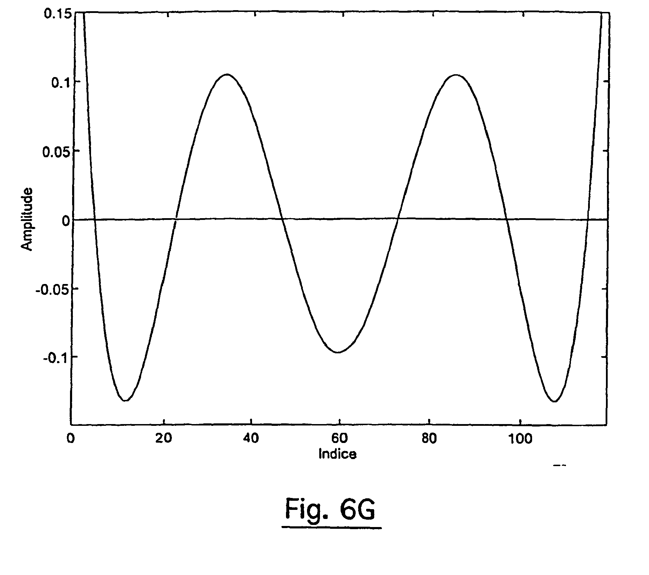

Les vecteurs propres $b_k$ sont égaux dans ce cas aux restrictions au support du train de données de SSAD [8] bien déterminées. Les premières valeurs propres $\lambda_k$ correspondantes, normalisées par le facteur multiplicatif $B_D T / \phi_c(0)$, sont représentées en Figure 5 pour $N = 120$ et $B_D T = 1/45$. Les vecteurs propres $b_k$ correspondant sont aussi représentés dans les Figures 6A à 6G.

### 7. Estimation du canal discret au niveau d'un train de données selon l'invention

L'invention propose un algorithme itératif simple (figure 3) permettant l'estimation conjointe de tous les paramètres inconnus du récepteur que celui-ci requiert pour mener à bien les taches qui lui incombant

Parmi ces paramètres, on peut citer, d'une manière non exhaustive, la réalisation **c** du canal discret, la variance du bruit $2N_o$ [6] et l'énergie moyenne par symbole reçu $2\bar{E}_s \overset{\Delta}{=} \phi_c(0).2E_s$. Si la DP a priori d'un paramètre inconnu du récepteur est connue, alors il est recommandé d'estimer celui-ci selon le critère MAP. Dans le cas contraire, il est conseillé de recourir au critère MV pour le bon accomplissement de cette estimation.

La DP d'une réalisation **c** du canal discret au niveau d'un train de données émis est déterminée indirectement par la DP, $p(\mathbf{e})$, de **e** qui est bien entendu bien connue du récepteur. Le vecteur **c** peut alors être estimé selon le critère MAP. Les DP de $2N_0$ et de $2\bar{E}_s$ sont en général inconnues du récepteur. Leur estimation est alors généralement accomplie selon le critère MV.

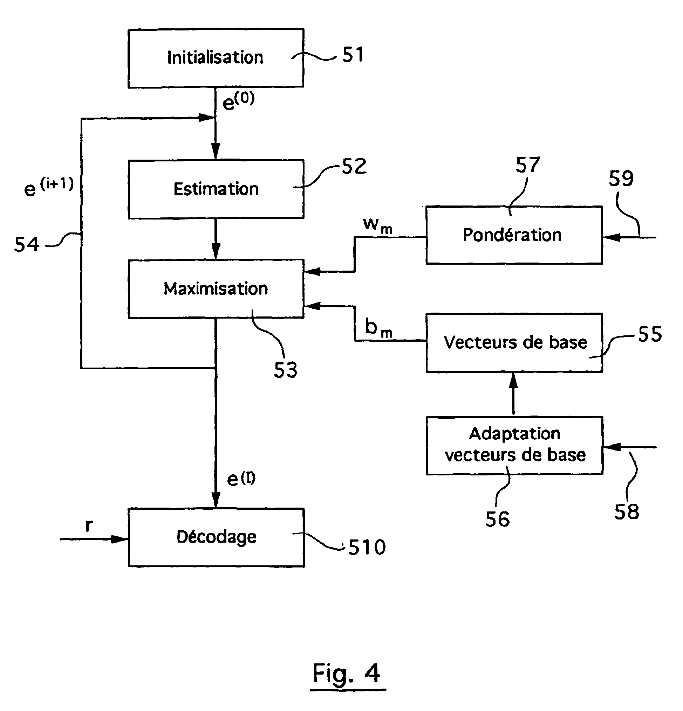

A titre d'exemple, et sans aucune limitation, la figure 4 présente le cas de l'estimation selon le critère du MAP du canal discret. L'estimation de paramètres supplémentaires tels que l'énergie par symbole transmis peut être accomplie conjointement avec celle du canal sans grand changement à l'algorithme final [6].

Notons respectivement par $\mathbf{r} = (r_0, r_1, ..., r_{N-1})'$, $\mathbf{a} = (a_0, a_1, ..., a_{N-1})'$, et $\mathbf{n} = (n_0, n_1, ..., n_{N-1})^t$ les vecteurs d'échantillons reçus, de symboles transmis et de bruit. Pour des raisons de correction d'erreurs, de synchronisation et d'estimation du canal discret au niveau des trains de données émis, quelques symboles transmis sont codés ou fixes. Le vecteur **a** de symboles transmis est alors caractérisé par la DP discrète a priori $P(\mathbf{a})$. L'estimation au MAP $\hat{\mathbf{c}}$ de **c**, ou de façon équivalente, $\hat{\mathbf{e}}$ de **e**, est la valeur

$$\hat{\mathbf{e}} = \arg \max_e p(\mathbf{e}|\mathbf{r})$$

qui maximise la DP conditionnelle a posteriori $p(\mathbf{e}|\mathbf{r})$.

La résolution directe de cette équation est un problème difficilement soluble. L'un des apports de l'invention est de proposer une solution simple à ce problème grâce à l'utilisation de l'algorithme itératif EM. Cet algorithme réestime de manière inductive le vecteur **e** de telle façon qu'une croissance monotone de la DP conditionnelle a posteriori $p(\mathbf{e}|\mathbf{r})$ soit garantie. Cette réestimation est réalisée via la maximisation d'une fonction auxiliaire $Q(\mathbf{e},\mathbf{e'})$ basée sur la mesure de l'information de Kullback-Leibler et fonction du vecteur courant **e** et du nouveau vecteur **e'**.

Etant donné le vecteur reçu **r**, l'algorithme EM démarre avec une valeur initiale 51 arbitraire $\mathbf{e}^{(0)}$ du vecteur **e**. L'évolution de l'estimation $\mathbf{e}^{(i)}$ à la réestimation $\mathbf{e}^{(i+1)}$ est réalisée via la fonction auxiliaire $Q(\mathbf{e},\mathbf{e'})$ en effectuant implicitement les étapes suivantes d'estimation et de maximisation :

- Etape d'estimation 52 : Calculer $Q(\mathbf{e}^{(i)},\mathbf{e'})$,
- Etape de maximisation 53 : Trouver l'estimation $\mathbf{e}^{(i+1)}$ qui maximise $Q(\mathbf{e}^{(i)},\mathbf{e'})$ en fonction de **e'**.

Sans aucune limitation, l'estimation itérative (54) de **e** peut être effectuée un nombre fini $I$ de fois. Ce nombre est choisi de telle façon que l'estimation $\mathbf{e}^{(I)}$ atteinte soit suffisamment proche en moyenne de l'estimation optimale $\hat{\mathbf{e}}$ pour garantir une dégradation imperceptible des performances du récepteur.

Pour un vecteur de données émis **a** et une réalisation de canal discret **c** donnés, la prise en compte de l'indépendance des composantes du vecteur bruit **n** permet d'écrire la DP conditionnelle $p(\mathbf{r}|\mathbf{a},\mathbf{e})$ du vecteur d'échantillons reçu **r** comme le produit des DP conditionnelles gaussiennes des composantes de ce vecteur.

La prise en compte des expressions explicites des DP $p(\mathbf{e})$ et $p(\mathbf{r}|\mathbf{a},\mathbf{e})$ et de la formulation précédente de l'algorithme EM, donne

$$e_m^{(i+1)} = w_m \sum_{k=0}^{N-1} \left( \sum_{a \in A} \frac{a^\bullet}{\sqrt{2E_s}} \, p(a_k = a | \mathbf{r}, \mathbf{e}^{(i)}) \right) \frac{r_k}{\sqrt{2\overline{E_s}}} (b_k^{(m)})^\bullet$$

comme expression explicite de la $m$-ième composante de l'estimation $\mathbf{e}^{(i+1)}$.

Dans cette expression, $b_k^{(m)}$ représente la $k$-ième composante du vecteur de base $\mathbf{b}_m$ (55) tel que défini plus haut. De façon à améliorer encore le procédé, on peut prévoir que la base de vecteurs 55 soit adaptée de façon à mieux correspondre au canal à estimer, en fonction de divers critères et notamment la largeur de l'étalement Doppler 58. Le paramètre $\omega_m$ est un facteur de pondération 57 qui dépend du rapport signal-à-bruit moyen $\overline{E_s}$, $/ N_0$ 59 à l'entrée du récepteur et de la valeur propre $\lambda_m$ divisées par la puissance $\phi_c(0)$ du canal discret.

Les facteurs de pondération $\omega_m$ sont aussi obtenus dans le cas de l'estimation du canal discret selon la méthode des moindre-carrés (MMC) avec connaissance parfaite des données émises. Elles mesurent la qualité de l'apport d'un vecteur de base $\mathbf{b}_m$ dans la représentation de l'estimation au MAP du canal discret.

Quand la puissance $\lambda_m / \varphi_c(0)$ de la $m$-ième composante $e_m$ de $\mathbf{e}$ est plus importante que la variance normalisée de bruit $N_0 / \overline{E_s}$, alors la contribution du vecteur de base $\mathbf{b}_m$ dans la représentation de l'estimation de canal est très précise. La pondération correspondante $w_m$ est alors très proche de 1.

Quand cette puissance est plus petite que la variance normalisée du bruit, la prise en compte du vecteur de base $\mathbf{b}_m$ dans l'estimation du canal fournit plus de bruit que d'information utile. La pondération $w_m$ est alors très proche de 0. En se sens, les pondérations $w_m$ jouent le même rôle et sont basés sur le même principe que ceux du filtrage adapté.

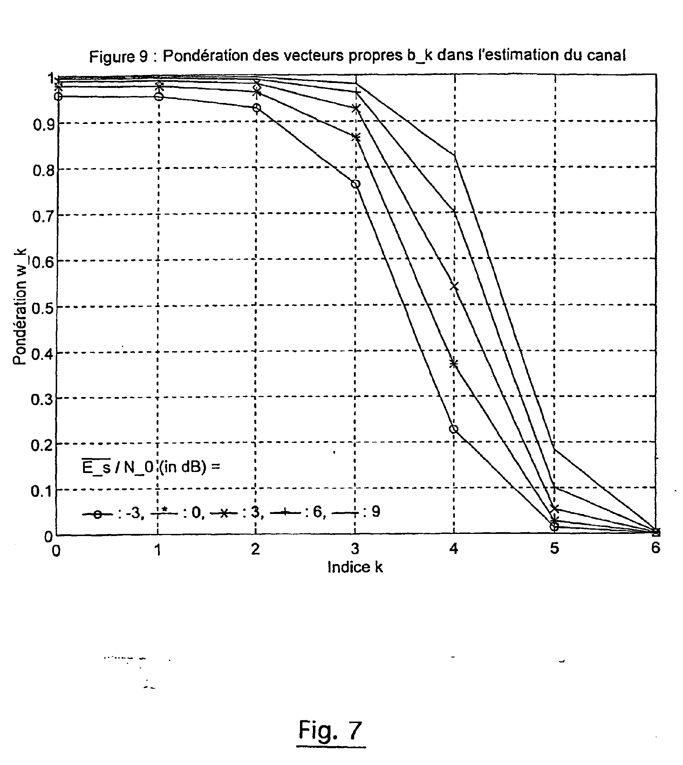

Comme le montre la Figure 7 pour $N = 120$ et $B_D T = 1/45$, les coefficients de pondération $\omega_m$ s'évanouissent rapidement en fonction de l'indice $m$ pour des valeurs pas trop élevées du rapport signal-à-bruit moyen $\overline{E_s} / N_0$. Cela est bien sûr dû à la décroissance très rapide des valeurs propres $\lambda_m$. L'un des atouts de l'invention est alors de pouvoir garder dans le processus d'estimation de canal, sans dégradation perceptible des performances de l'estimateur, uniquement les quelques premiers coefficients des $\mathbf{e}^{(i)}$.

L'un des autres avantages de l'invention est de pouvoir améliorer les performances de l'estimation du canal discret grâce à la prise en compte par le récepteur de la mémoire due aux modulations à phase continue (MSK, GMSK, ...), des symboles de synchronisation et d'une partie ou de la totalité de la structure codée des autres symboles du train de donnée reçu.

La prise en compte des symboles de synchronisation dans le processus d'estimation de canal est immédiate. Soient $S$ l'ensemble des indices des symboles de synchronisation dans un train de donnée et $\alpha_k$, $k \in S$, les valeurs prises par ces symboles. Comme ces valeurs sont connues du récepteur, alors la DP conditionnelle $p(a_k = a | \mathbf{r}, \mathbf{e}^{(i)})$, $k \in S$, peut être systématiquement remplacée par 1 pour $a = a_k$ et par 0 si non.

La prise en compte de la mémoire de la modulation de phase utilisée ou de la structure codée des symboles restants est généralement moins systématique. Elle peut par exemple être réalisée indirectement en déterminant, via l'algorithme de Bahl [9] ou l'algorithme SOVA [10], les DP conditionnelles $p(a_k = a | \mathbf{r}, \mathbf{e}^{(i)})$ à partir des treillis de la modulation et des codes utilisés au niveau de l'émetteur [13-15].

Dans le cas particulier où la modulation est sans mémoire et les symboles sont non codés ou le sont avec des codes simples tels que les codes à répétition, la structure de codage peut être intégrée directement dans la formule précédente.

Ceci est aussi valable dans le cas où, pour des raisons de complexité, une partie ou la totalité du codage n'est pas prise en compte par l'estimateur. Un exemple typique est celui des codes concaténés en série où le code interne est souvent le seul à être pris en compte dans l'estimation de canal. Un autre exemple typique est celui des modulations à mémoire codées où seule la mémoire de la modulation est prise en compte dans le processus d'estimation.

La valeur de l'estimation du canal vers laquelle converge l'algorithme EM est en grande partie conditionnée par les conditions initiales utilisées par cet algorithme. Si ces conditions initiales sont mal choisies, l'algorithme EM peut converger vers des estimations, $\hat{\mathbf{e}}$ de $\mathbf{e}$, correspondant à des maxima locaux de la DP conditionnelle *a posteriori* $p(\mathbf{e}|\mathbf{r})$.

La meilleure façon d'obtenir ces conditions initiales est bien sûr d'utiliser les symboles de synchronisation qui sont parfaitement connus du récepteur. D'autres techniques pour lever l'ambiguïté sont également envisageables.

Le choix de l'emplacement de ces symboles de synchronisation dans les trains de données émis est non seulement déterminant pour la qualité de l'estimation du canal mais aussi pour la bonne convergence de l'algorithme EM vers l'estimation optimale qui maximise $p(\mathbf{e}|\mathbf{r})$. La répartition uniforme des symboles de synchronisation au niveau des trains de données émis se trouve être bénéfique non seulement pour une meilleure estimation du canal mais aussi pour une meilleure stabiliser et même une accélération de la convergence de l'algorithme EM.

Pour un bon déroulement de la synchronisation des trains de données au niveau du récepteur, il est parfois impératif de regrouper les symboles de synchronisation ou de les répartir sur une petite étendue des trains de données.

Dans ce cas, l'algorithme EM présente des instabilités qui peuvent compromettre sévèrement la qualité de l'estimation de canal.

L'un des apports de l'invention est de pouvoir stabiliser cet algorithme en prenant en compte une partie ou la totalité de la structure codée des symboles d'information du train de données reçu. Des codes simples tels que les codes à répétition dont les mots de codes sont bien entrelacés au niveau des trains de données peuvent être utilisés avantageusement pour accomplir cette tâche de stabilisation à moindres frais.

8. Démodulation et décodage des données selon l'invention

Notons par $\hat{\mathbf{e}}$ la $l$-ième réestimation, $\mathbf{e}^{(l)}$, de $\mathbf{e}$. Basé sur cette estimation et sur le vecteur $\mathbf{r}$ d'échantillons à la sortie du filtre adapté, le détecteur ou décodeur 510 peut être conçu pour minimiser un critère donné. Il peut en particulier minimiser la probabilité d'erreur des données d'information ou des symboles modulés codés.

A titre d'exemple, le détecteur ou décodeur 510 optimal qui minimise la probabilité d'erreur symbole doit trouver pour un symbole d'information $a_k$, $k \notin S$, donné le symbole

$$\hat{a}_k = \arg \max_{a \in A} p(a_k = a | \mathbf{r}, \hat{\mathbf{e}})$$

qui maximise la DP conditionnelle $p(a_k = a | \mathbf{r}, \hat{\mathbf{e}})$.

Ce détecteur peut prendre en compte la mémoire de la modulation de phase utilisée ou la structure codée des symboles émis. Cette prise en compte peut être réalisée en particulier via l'algorithme de Viterbi [11, 12], l'algorithme de Bahl [9] ou l'algorithme SOVA [10]. Ces deux derniers algorithmes peuvent être utilisés avantageusement dans le cas ou le récepteur exige des valeurs de confiance des données décodées. Ceci est particulièrement le cas des systèmes de communication utilisant un codage concaténé en série et où le décodeur externe à besoin de sorties pondérées du code interne pour améliorer ses performances.

Dans le cas particulier où la modulation est sans mémoire et les symboles sont non codés ou le sont avec des codes simples tels que les codes à répétition, la structure de codage peut être intégrée directement dans la formule précédente.

Ceci est aussi valable dans le cas où, pour des raisons de complexité, une partie ou la totalité du codage n'est pas prise en compte par le décodeur. Un exemple typique est celui des codes concaténés en série où le code interne est souvent décodé séparément du code externe. Dans ce cas particulier, la structure du code interne permet de générer systématiquement et à moindres frais des sorties pondérées pour le décodeur externe.

**ANNEXE : REFERENCES**

[1] J. G. Proakis, « Digital Communications », McGraw-Hill, New York, 1989.

[2] A. P. Dempster, N. M. Laird and D. B. Rubin, « Maximum Likelihood from Incomplete Data via the EM Algorithm », J. Roy. Stat. Soc., Ser. 39, 1977.

[3] L. E. Baum, T. Petrie, G. Soules and N. Weiss, « A Maximisation Technique Occurring in the Statistical Analysis of Probabilistic Functions of Markov Chains », Ann. Math. Stat., vol. 41, 1970.

[4] L. A. Liporace, « Maximum Likelihood Estimation for Multivariate Observations of Markov Sources », IEEE Trans. Inform. Theory, IT-28, Septembre 1982.

[5] B. H. Juang, « Maximum Likelihood Estimation for Mixture multivariate Stochastic Observations of Markov Chains », AT&T Technical Journal, vol. 64, no. 6, Juillet-Août 1985.

[6] G. K. Kaleh, « Joint Carrier Phase Estimation and Symbols Decoding of Trellis Codes », International Symposium on Information Theory, San Diego, Ca, Janvier 1990.

[7] Louis L. Scharf, « Statistical Signal Processing: detection, estimation, and time series analysis », Addison-Wesley Publishing Company, New York, 1991.

[8] D. Slepian, « Prolate Spheroidal Wave Functions, Fourier Analysis and Uncertainty --- V: The Discrete Case », BSTJ, mai-juin 1978.

[9] L. R. Bahl, J. Cocke, F. Jelinek and J. Raviv, « Optimal Decoding of Linear Codes for Minimizing Symbol Error Rate », IEEE Transactions on Information Theory, vol. IT-20, Mars 1974.

[10] J. Hagenauer et P. Hoeher, « A Viterbi Algorithm with Soft-Decision Outputs and its Applications », GLOBECOM'89, Dallas, Texas, Novembre 1989.

[11] G. D. Forney, Jr., « The Viterbi Algorithm », Proc. IEEE, 61, Mars 1973.

[12] G. D. Forney, Jr., « Maximum Likelihood Sequence Estimation of Digital Sequences in the Presence of Intersymbol Interference », IEEE Trans. Inf. Theory, IT-18, Mai 1972.
[13] J. K. Wolf, « Efficient Maximum Likelihood Decoding of Linear Block Codes Using a Trellis », IEEE Transactions on Information Theory, vol. IT-24, no. 1, Janvier 1978.
[14] G. D. Forney, Jr., « The Viterbi Algorithm », Proc. of the IEEE, vol. 61, no. 3, Mars 1973.
[15] G. D. Forney, Jr., « Coset Codes --- Part II: Binary Lattices and Related Codes », IEEE Transactions on Information Theory, vol. 34, no. 5, September 1988.
[16] R. S. Kennedy, « Fading Dispersive Communication Channels », John Wiley & Sons, 1969.

## Revendications

1. Procédé d'estimation d'un canal de transmission d'un signal numérique, organisé en trains de données consécutifs comprenant chacun un nombre prédéterminé de symboles successifs,
chacun desdits trains de données comportant au moins deux blocs distincts de référence pour l'estimation dudit canal, répartis parmi les symboles utiles représentatifs du signal source à transmettre,
chacun desdits blocs de référence étant formé par au moins un symbole de référence connu du récepteur et/ou identifiable par ledit récepteur, au moins certains desdits symboles de référence étant des symboles de référence explicites, fixés et connus a priori par ledit récepteur,
**caractérisé en ce qu'**il comprend une étape d'écriture de ladite estimation sous la forme d'une combinaison de fonctions de base prédéterminées (55), de largeur de bande supérieure ou égale à celle du spectre de puissance Doppler dudit signal,
et **en ce qu'**il met en oeuvre un algorithme d'estimation-maximisation, ladite maximisation tenant compte desdites fonctions de base, et comprenant les étapes suivantes, pour chacun desdits trains de données :

   - extraction et/ou détermination desdits symboles de référence explicite ;
   - utilisation desdits symboles de référence explicite, pour obtenir une première estimation (421) dudit canal de transmission ;
   - première estimation (431) desdits symboles utiles, en fonction de ladite première estimation du canal de transmission ;

et, si nécessaire, au moins une itération (44) des étapes suivantes :

   - détermination d'une seconde estimation (422), plus précise, dudit canal de transmission, en fonction de ladite première estimation des symboles utiles;
   - seconde estimation (432) desdits symboles utiles, en fonction de ladite seconde estimation du canal de transmission.

2. Procédé selon la revendication 1. **caractérisé en ce que** lesdites fonctions de base sont des restrictions de séquences sphéroïdales aplaties discrètes (SSAD).

3. Procédé selon l'une quelconque des revendications 1 et 2, **caractérisé en ce qu'**il comprend une étape préliminaire d'adaptation (56) des caractéristiques desdites fonctions de base, notamment en fonction dudit spectre de puissance Doppler.

4. Procédé selon l'une quelconque des revendications 1 à 3, **caractérisé en ce que** ladite étape de seconde estimation (432) desdits symboles utiles est intégrée dans ladite étape de détermination d'une seconde estimation (422) du canal de transmission, l'estimation des symboles utiles étant utilisée directement dans le calcul de l'estimation du canal de transmission.

5. Dispositif d'estimation d'un canal de transmission d'un signal numérique organisé en trains de données consécutifs comprenant chacun un nombre prédéterminé de symboles successifs,
chacun desdits trains de données comportant au moins deux blocs distincts de référence pour l'estimation dudit canal, répartis parmi les symboles utiles représentatifs du signal source à transmettre, au moins certains desdits symboles de référence étant des symboles de référence explicites, fixés et connus a priori par ledit récepteur,
chacun desdits blocs de référence étant formé par au moins un symbole de référence connu du récepteur et/ou identifiable par ledit récepteur,
**caractérisé en ce qu'**il comprend des moyens d'écriture de ladite estimation sous la forme d'une combinaison de fonctions de base prédéterminées, de largeur de bande supérieure ou égale à celle du spectre de puissance Doppler dudit signal,

et des moyens de mise en oeuvre d'un algorithme d'estimation-maximisation, ladite maximisation tenant compte desdites fonctions de base, comprenant :

- des moyens d'extraction et/ou de détermination desdits symboles de référence présents dans chacun desdits trains de données ;
- des moyens d'analyse desdits symboles de référence, pour obtenir une première estimation dudit canal de transmission ;
- des premiers moyens d'estimation desdits symboles utiles, en fonction de ladite première estimation du canal de transmission ;
- des moyens de détermination d'une seconde estimation, plus précise, dudit canal de transmission, en fonction de ladite première estimation des symboles utiles ;
- des seconds moyens d'estimation desdits symboles utiles, en fonction de ladite seconde estimation du canal de transmission,

lesdits seconds moyens d'estimation étant rebouclés sur lesdits moyens de détermination d'une seconde estimation dudit canal de transmission, si nécessaire.

**Claims**

1. Method for estimation of a channel for transmission of a digital signal organized in consecutive data trains each comprising a predetermined number of successive symbols,

   each of said data trains comprising at least two distinct reference blocks for the estimation of said channel, distributed among useful symbols representing a source signal to be transmitted,

   each of said reference blocks being formed by at least one reference symbol known to a receiver and/or identifiable by said receiver, at least some of said reference symbols being explicite reference symbols, a priori defined and known by said receiver ;

   **characterized in that** it comprises a step of writing said estimation in the form of a combination of predetermined base functions (55), having a bandwidth greater than or equal to that of a Doppler power spectrum of said signal;

   and **in that** it implements an estimation-maximization algorithm, said maximization taking into account said base functions, and comprising the following steps for each of said data trains:

   - extraction and/or determination of said explicit reference symbols ;
   - use of said explicit reference symbols to obtain a first estimation (421) of said transmission channel;
   - a first estimation (431) of said useful symbols as a function of said first estimation of the transmission channel ;

   and if necessary, at least one iteration (44) of the following steps:

   - a determination of a second, more precise estimation (422) of said transmission channel as a function of said first estimation of the useful symbols;
   - a second estimation (432) of said useful symbols as a function of said second estimation of the transmission channel estimation.

2. Method according to claim 1, **characterized in that** said base functions are discrete prolate spheroidal sequences (DPSS).

3. Method according to any one of claims 1 and 2, **characterized in that** it comprises a preliminary step (56) for matching of characteristics of said base functions notably according to said Doppler power spectrum.

4. Method according to any one of claims 1 to 3, **characterized in that** said step for the second estimation (432) of said useful symbols is integrated into said step for determining a second estimation (422) of the transmission channel, the estimation of the useful symbols being used directly in the computation of the estimation of the transmission channel.

5. Device for estimation of a channel for transmission of a digital signal organized in consecutive data trains each comprising a predetermined number of successive symbols,

each of said data trains comprising at least two distinct reference blocks for the estimation of said channel, distributed among useful symbols representing a source signal to be transmitted,

each of said reference blocks being formed by at least one reference symbol known to a receiver and/or identifiable by said receiver, at least some of said reference symbols being explicite reference symbols, a priori defined and known by said receiver ;

**characterized in that** it comprises means for the writing of said estimation in the form of a combination of predetermined base functions, with a bandwidth greater than or equal to that of a Doppler power spectrum of said signal, and means for implementing an estimation-maximization algorithm, said maximization taking into account said base functions, comprising :

- means for extraction and/or determination of said reference symbols present in each of said data trains;
- means for analysis of said reference symbols to obtain a first estimation of said transmission channel;
- first means for the estimation of said useful symbols, as a function of said first estimation of the transmission channel;
- means for determining a second, more precise estimation of said transmission channel, as a function of said first estimation of the useful symbols;
- second means for the estimation of said useful symbols, as a function of said second estimation of the transmission channel ;
- said second estimation means being looped to said means for determining a second estimation of said transmission channel, if necessary.

**Patentansprüche**

1.  Verfahren zur Schätzung eines Übertragungskanals eines Digitalsignals, das in fortlaufende Datenströme organisiert ist, von denen jeder eine vorgegebene Zahl aufeinander folgender Symbole umfasst,

    wobei jeder dieser Datenströme mindestens zwei verschiedene Referenzblöcke zur Schätzung des Kanals umfasst, die unter den Nutzsignalen, welche für das das zu übertragende Quellsignal repräsentativ sind, verteilt sind,

    wobei jeder dieser Referenzblöcke aus mindestens einem dem Empfänger bekannten und/oder von diesem Empfänger identifizierbaren Referenzsymbol gebildet wird, wobei mindestens einige dieser Referenzsymbole a priori definierte und dem Empfänger bekannte explizite Referenzsymbole sind,

    **dadurch gekennzeichnet, dass** es einen Schritt zum Schreiben dieser Schätzung in Form einer Kombination vorgegebener Basisfunktionen (55) umfasst, deren Bandbreite mindestens der des Doppler-Leistungsspektrums dieses Signals entspricht,

    und dass es einen Schätzungs-/Maximierungsalgorithmus einsetzt, wobei die Maximierung die Basisfunktionen berücksichtigt, und für jeden der Datenströme die folgenden Schritte umfasst:

    - Extraktion und/oder Bestimmung der expliziten Referenzsymbole;
    - Verwendung dieser expliziten Referenzsymbole, um eine erste Schätzung (421) des Übertragungskanals zu erhalten;
    - erste Schätzung (431) der Nutzsymbole in Abhängigkeit von der ersten Schätzung des Übertragungskanals;

    und erforderlichenfalls mindestens eine Iteration (44) der folgenden Schritte:

    - Bestimmung einer zweiten, genaueren Schätzung (422) des Übertragungskanals in Abhängigkeit von der ersten Schätzung der Nutzsymbole;
    - zweite Schätzung (432) der Nutzsymbole in Abhängigkeit von der zweiten Schätzung des Übertragungskanals.

2.  Verfahren nach Anspruch 1, **dadurch gekennzeichnet, dass** die Basisfunktionen Einschränkungen von Discrete Prolate Spheroidal Sequences (DPSS) sind.

3.  Verfahren nach einem der Ansprüche 1 und 2, **dadurch gekennzeichnet, dass** es einen ersten Schritt zur Adaption (56) der Eigenschaften dieser Basisfunktionen umfasst, insbesondere in Abhängigkeit vom Doppler-Leistungsspektrum.

4.  Verfahren nach einem der Ansprüche 1 bis 3, **dadurch gekennzeichnet, dass** der Schritt zur zweiten Schätzung (432) der Nutzsymbole in den Schritt zur Bestimmung einer zweiten Schätzung (422) des Übertragungskanals integriert ist, wobei die Schätzung der Nutzsymbole direkt bei der Berechnung der Schätzung des Übertragungskanals eingesetzt wird.

5. Vorrichtung zur Schätzung eines Übertragungskanals für ein Digitalsignal, das in fortlaufende Datenströme organisiert ist, von denen jeder eine vorgegebene Zahl aufeinander folgender Symbole umfasst,
   wobei jeder dieser Datenströme mindestens zwei verschiedene Referenzblöcke zur Schätzung des Kanals umfasst, die unter den Nutzsignalen, welche für das das zu übertragende Quellsignal repräsentativ sind, verteilt sind,
   wobei jeder dieser Referenzblöcke aus mindestens einem dem Empfänger bekannten und/oder von diesem Empfänger identifizierbaren Referenzsymbol gebildet wird, wobei mindestens einige dieser Referenzsymbole a priori definierte und dem Empfänger bekannte explizite Referenzsymbole sind,
   **dadurch gekennzeichnet, dass** sie Mittel zum Schreiben dieser Schätzung in Form einer Kombination vorgegebener Basisfunktionen umfasst, deren Bandbreite mindestens der des Doppler-Leistungsspektrums dieses Signals entspricht,
   und Mittel zum Einsetzen eines Schätzungs-/Maximierungsalgorithmus, wobei diese Maximierung die Basisfunktionen berücksichtigt, umfassend:

   - Mittel zur Extraktion und/oder Bestimmung der in jedem Datenstrom vorkommenden Referenzsymbole;
   - Mittel zum Analysieren dieser Referenzsymbole, um eine erste Schätzung des Übertragungskanals zu erhalten;
   - erste Mittel zur Schätzung der Nutzsymbole in Abhängigkeit von der ersten Schätzung des Übertragungskanals;
   - Mittel zur Bestimmung einer zweiten, genaueren Schätzung des Übertragungskanals in Abhängigkeit von der ersten Schätzung der Nutzsymbole;
   - zweite Mittel zur Schätzung der Nutzsymbole in Abhängigkeit von der zweiten Schätzung des Übertragungskanals,

   wobei diese zweiten Schätzmittel erforderlichenfalls auf die Mittel zur Bestimmung einer zweiten Schätzung des Übertragungskanals zurückgeschleift werden.

Fig. 1

Fig. 2

EP 0 802 656 B1

| Synchronisation grossière | — 411 |

— 41

| Synchronisation fine | — 412 |

SYNCHRO

| Première estimation canal | — 421 |

| Première estimation symboles utiles | — 431 |

| Ré-estimation du canal | — 422 |

44 —

| Ré-estimation symboles utiles | — 432 |

## Fig. 3

Fig. 4

Fig. 5

**Fig. 6A**

**Fig. 6B**

Fig. 6C

Fig. 6D

Fig. 6E

Fig. 6F

Fig. 6G

Figure 9 : Pondération des vecteurs propres b_k dans l'estimation du canal

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9428661 A

**Littérature non-brevet citée dans la description**

- **J. G. PROAKIS.** Digital Communications. Mc-Graw-Hill, 1989
- **A. P. DEMPSTER ; N. M. LAIRD ; D. B. RUBIN.** Maximum Likelihood from Incomplete Data via the EM Algorithm. *J. Roy. Stat. Soc., Ser,* 1977
- **L. E. BAUM ; T. PETRIE ; G. SOULES ; N. WEISS.** A Maximisation Technique Occurring in the Statistical Analysis of Probabilistic Functions of Markov Chains. *Ann. Math. Stat,* 1970, vol. 41
- **L. A. LIPORACE.** Maximum Likelihood Estimation for Multivariate Observations of Markov Sources. *IEEE Trans. Inform. Theory,* 28 Septembre 1982
- **B. H. JUANG.** Maximum Likelihood Estimation for Mixture multivariate Stochastic Observations of Markov Chains. *AT&T Technical Journal,* Juillet 1985, vol. 64 (6
- **G. K. KALEH.** Joint Carrier Phase Estimation and Symbols Decoding of Trellis Codes. *International Symposium on Information Theory,* Janvier 1990
- **LOUIS L. SCHARF.** Statistical Signal Processing: detection, estimation, and time series analysis. Addison-Wesley Publishing Company, 1991
- **D. SLEPIAN.** Prolate Spheroidal Wave Functions, Fourier Analysis and Uncertainty --- V: The Discrete Case. *BSTJ,* Mai 1978

- **L. R. BAHL ; J. COCKE ; F. JELINEK ; J. RAVIV.** Optimal Decoding of Linear Codes for Minimizing Symbol Error Rate. *IEEE Transactions on Information Theory,* 20 Mars 1974
- **J. HAGENAUER ; P. HOEHER.** A Viterbi Algorithm with Soft-Decision Outputs and its Applications. *GLOBECOM'89,* Novembre 1989
- **G. D. FORNEY, JR.** The Viterbi Algorithm. *Proc. IEEE,* Mars 1973, vol. 61
- **G. D. FORNEY, JR.** Maximum Likelihood Sequence Estimation of Digital Sequences in the Presence of Intersymbol Interference. *IEEE Trans. Inf. Theory,* 18 Mai 1972
- **J. K. WOLF.** Efficient Maximum Likelihood Decoding of Linear Block Codes Using a Trellis. *IEEE Transactions on Information Theory,* 01 Janvier 1978, vol. IT-24
- **G. D. FORNEY, JR.** The Viterbi Algorithm. *Proc. of the IEEE,* 03 Mars 1973, vol. 61
- **G. D. FORNEY, JR.** Coset Codes --- Part II: Binary Lattices and Related Codes. *IEEE Transactions on Information Theory,* Septembre 1988, vol. 34 (5
- **R. S. KENNEDY.** Fading Dispersive Communication Channels. John Wiley & Sons, 1969